# EUROPEAN PATENT SPECIFICATION

(11) **EP 3 396 464 B1**
(45) Date of publication and mention of the grant of the patent: **06.05.2020**
(21) Application number: 16884263.1
(22) Date of filing: 25.01.2016
(51) Int. Cl.: G03G 15/08

(54) **POWDER OUTLET DEVICE FOR POWDER BARREL**
PULVERAUSGABEVORRICHTUNG FÜR PULVERTROMMEL
DISPOSITIF DE SORTIE DE POUDRE POUR CANON À POUDRE

(30) Priority: 15.01.2016 CN 201610025218
(43) Date of publication of application: 31.10.2018
(73) Proprietor: Beijing Xintron Office Equipment Co.Ltd., Beijing 101100 (CN)
(72) Inventor: GENG, Haifeng, Beijing 101100 (CN); CHEN, Bo, Beijing 101100 (CN)
(74) Representative: Hanna Moore + Curley
(86) International application number: PCT/CN2016/000052
(87) International publication number: WO 2017/120699

(56) References cited:
- CN-A- 102 331 697
- CN-A- 102 968 032
- CN-A- 104 090 474
- CN-Y- 201 097 119
- CN-Y- 201 097 119
- JP-A- 2006 301 387
- US-A- 5 828 935

## Description

### BACKGROUND OF THE PRESENT INVENTION

### Field of Invention

The present invention relates to a print copier part, and more particularly to a toner outlet device for a toner cartridge.

### Description of Related Arts

Toner cartridges are one of the main consumables for printer and copiers to store and supply toner. Conventional toner cartridge is pressed between the driving claw and the top lid by a rubber sealing ring in an interference manner, so as to play a sealing role. Due to the interference fit, the resistance when pulling out the driving claw is greater than the pull-out force of the structure. During installing the toner cartridge, the force for pulling out the driving claw is obtained from a mechanism which converts a direction of a force generated by the operator when turning the spanner. That is to say, if a greater force is needed for pulling out the driving claw, then the installation is more difficult for the operator, which indicates higher strength requirements for the parts of the spanner and the internal mechanism of the machine. At the same time, for removing the toner cartridge, the tonner outlet should be closed first for avoiding toner leakage of the toner cartridge. Moreover, the machine parts are very easy to be damaged due to excessive operations by the operator.

Utility model CN 201097119Y relates to a toner cartridge for an electrophotographic image forming apparatus, which comprises a cylinder body and an end cover.

### SUMMARY OF THE PRESENT INVENTION

An object of the present invention is to provide a toner outlet device for a toner cartridge, which overcomes defects of conventional technologies, reduces resistance for pulling out a driving claw, and is easy to operate.

Accordingly, in order to accomplish the above object, the present invention provides:
a toner outlet device for a toner cartridge, comprising: a top lid and a driving claw arranged on the top lid, wherein the top lid is in clearance fit with the driving claw; a rotary lid is rotatably arranged inside the top lid; the driving claw is clutched on the rotary lid; a toner outlet on the rotary lid is selectively connected to a side opening of the top lid; a driving head is arranged on a top portion of the top lid; the driving head transmits a torsion to the driving claw through the rotary lid.

Preferably, the rotary lid comprises a loop side board, wherein the toner outlet is arranged on the loop side board; a loop positioning board is arranged on an internal side of the loop side board, and a loop tooth part is arranged on an external side of the loop positioning board; a positioning pole is arranged inside the top lid, and is selectively clutched on the loop positioning board.

Preferably, the loop positioning board is sleeved on a reset torsion spring.

Preferably, the rotary lid is pressed inside the top lid through a positioning ring.

Preferably, a driving shaft is arranged at a bottom portion of the driving head, and the driving shaft and the driving head are movably plugged into each other; the driving claw is mounted at a bottom portion of the driving shaft through a blot, a second sealer is arranged between the driving shaft and the top lid.

Preferably, a plurality of supporting sheets are arranged at a top portion of the driving head, and adjacent supporting sheets are in clearance fit; a first block plate and a second block plate are arranged on each of the supporting sheets.

Preferably, a conical ring is arranged at an external side of the driving head.

Preferably, a first sealer is arranged between the driving head and the top lid; a conical face is arranged on a side wall of the top lid, and a groove is drilled on the conical face; the first sealer is clutched in the groove.

Preferably, a spring is arranged between the driving claw and a positioning ring.

Beneficial effects of the foregoing structure are as follows: the present invention improves the structure of the toner cartridge, so that the driving claw can be flexibly rotated and drawn along with a driving structure of a printer, which facilitates installation of the toner cartridge. In addition, the present invention greatly reduces the resistance for pushing back the driving claw, and when the driving head is pulled out and pushed back, it cooperates with the top lid to control the toner outlet through an external control switch. There are double coordination with the internal rotary lid, which can present more stable sealing performance when a user removes the toner cartridge halfway, avoiding damage to the machine parts due to excessive operations .

### BRIEF DESCRIPTION OF THE DRAWINGS

Fig. 1 is an exploded view of an embodiment of the present invention.
Fig. 2 is a structural view of a top lid according to the embodiment of the present invention.
Fig. 3 is a structural view of a rotary lid according to the embodiment of the present invention.

Element reference: 1-top lid, 2-driving claw, 3-rotary lid, 4-toner outlet, 5-opening, 6-driving head, 7-loop side board, 8-loop positioning board, 9-loop tooth part, 10-positioning pole, 11-reset torsion spring, 12-positioning ring, 13-driving shaft, 14-bolt, 15-supporting sheet, 16-first block plate, 17-second block plate, 18-conical ring, 19-first sealer, 20-second sealer, 21-conical face, 22-groove, 23-spring.

### DETAILED DESCRIPTION OF THE PREFERRED EMBODIMENT

The standard parts used in the present invention are all commercially available, and the irregular parts can be customized according to the description and drawings, and the specific connection methods of all parts adopt the mature conventional methods such as bolts, rivets, welding, sticking and pasting, which will not be described in detail here.

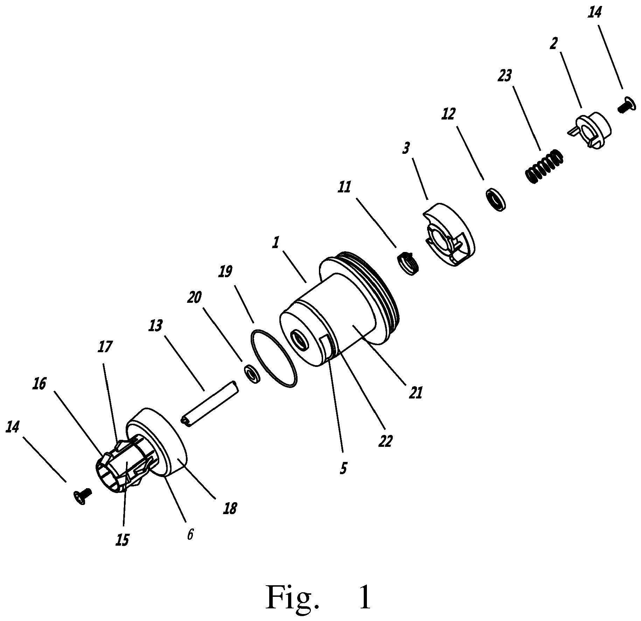

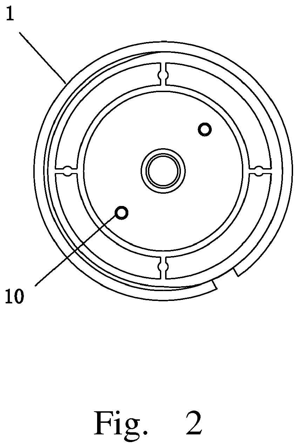

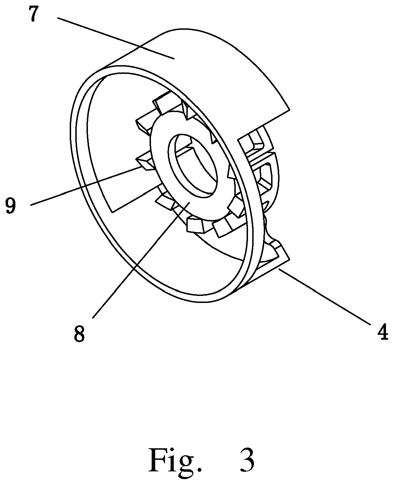

Referring to Figs. 1-3, an embodiment of the present invention comprises: a top lid 1 and a driving claw 2 arranged on the top lid 1, wherein the top lid 1 is in clearance fit with the driving claw 2; a rotary lid 3 is rotatably arranged inside the top lid 1; the driving claw 2 is clutched on the rotary lid 3; a toner outlet 4 on the rotary lid 3 is selectively connected to a side opening 5 of the top lid 1; a driving head 6 is arranged on a top portion of the top lid 1; the driving head 6 transmits a torsion to the rotary lid 3 through the driving claw 2. The rotary lid 3 comprises a loop side board 7, wherein the toner outlet 4 is arranged on the loop side board 7; a loop positioning board 8 is arranged on an internal side of the loop side board 7, and a loop tooth part 9 is arranged on an external side of the loop positioning board 8; a positioning pole 10 is arranged inside the top lid 1, and is selectively clutched on the loop positioning board 8. The loop positioning board 8 is sleeved on a reset torsion spring 11. The rotary lid 3 is pressed inside the top lid 1 through a positioning ring 12. A driving shaft 13 is arranged at a bottom portion of the driving head 6, and the driving shaft 13 and the driving head 6 are movably plugged into each other; the driving claw 2 is mounted at a bottom portion of the driving shaft 13 through a blot 14, a second sealer 20 is arranged between the driving shaft 13 and the top lid 1. A plurality of supporting sheets 15 are arranged at a top portion of the driving head 6, and adjacent supporting sheets are in clearance fit; a first block plate 16 and a second block plate 17 are arranged on each of the supporting sheets 15. A conical ring 18 is arranged at an external side of the driving head 6. A first sealer 19 is arranged between the driving head 6 and the top lid 1; a conical face 21 is arranged on a side wall of the top lid 1, and a groove 22 is drilled on the conical face 21; the first sealer 19 is clutched in the groove 22. A spring 23 is arranged between the driving claw 2 and a positioning ring 12.

Operating principle of the toner outlet device is that the driving head and a printer drive structure are engaged so that a motor can drive the driving head to rotate. A pole at a bottom of the driving head passes through a round hole at a middle of a top surface of the top lid for cooperating, so as to slid up and down and rotate, thereby transmitting the torsion to the driving claw. The square toner outlet on the top lid cooperates with the rotary lid, and is limited by the positioning pole inside the top lid. The rotary lid can relatively rotate 0-90 degrees, which means from an original closed state to a fully opened state. The reset torsion spring slides up and down in the top round hole of the top lid through the driving head. After the clutch positions of the driving claw and the rotary lid are disengaged, the reset torsion spring is responsible for driving the rotary lid back to an original position, which means from the fully opened state to the closed state. The driving claw drives the rotary lid to rotate 90 degrees inside the top lid, so that the toner outlet is maintained in the opened state for discharging toner. When clamps of the driving claw and the rotary lid are disengaged, the reset torsion spring drives it to the original closed state, preventing the toner from flowing out from the toner outlet.

The present invention improves the structure of the toner cartridge, so that the driving claw can be flexibly rotated and drawn along with a driving structure of a printer, which facilitates installation of the toner cartridge.

One skilled in the art will understand that the embodiment of the present invention as shown in the drawings and described above is exemplary only and not intended to be limiting. It will thus be seen that the objects of the present invention have been fully and effectively accomplished.

## Claims

1. A toner outlet device for a toner cartridge, comprising: a top lid (1) and a driving claw (2) arranged on the top lid (1), wherein the top lid (1) is in clearance fit with the driving claw (2); a rotary lid (3) is rotatably arranged inside the top lid (1); the driving claw (2) is clutched on the rotary lid (3); a toner outlet (4) on the rotary lid (3) is selectively connected to a side opening (5) of the top lid (1); a driving head (6) is arranged on a top portion of the top lid (1); the driving head (6) transmits a torsion to the driving claw (2) through the rotary lid (3).

2. The toner outlet device, as recited in claim 1, wherein the rotary lid (3) comprises a loop side board (7), wherein the toner outlet (4) is arranged on the loop side board (7); a loop positioning board (8) is arranged on an internal side of the loop side board (7), and a loop tooth part (9) is arranged on an external side of the loop positioning board (8); a positioning pole (10) is arranged inside the top lid (1), and is selectively clutched on the loop positioning board (8).

3. The toner outlet device, as recited in claim 2, wherein the loop positioning board (8) is sleeved on a reset torsion spring (11).

4. The toner outlet device, as recited in claim 1, wherein the rotary lid (3) is pressed inside the top lid (1) through a positioning ring (12).

5. The toner outlet device, as recited in claim 1, wherein a driving shaft (13) is arranged at a bottom portion of the driving head (6), and the driving shaft (13) and the driving head (6) are movably plugged into each other; the driving claw (2) is mounted at a bottom portion of the driving shaft (13) through a blot (14), a second sealer (20) is arranged between the driving shaft (13) and the top lid (1).

6. The toner outlet device, as recited in claim 1, wherein a plurality of supporting sheets (15) are arranged at a top portion of the driving head (6), and adjacent supporting sheets are in clearance fit; a first block plate (16) and a second block plate (17) are arranged on each of the supporting sheets (15).

7. The toner outlet device, as recited in claim 1, wherein a conical ring (18) is arranged at an external side of the driving head (6).

8. The toner outlet device, as recited in claim 1, wherein a first sealer (19) is arranged between the driving head (6) and the top lid (1); a conical face (21) is arranged on a side wall of the top lid (1), and a groove (22) is drilled on the conical face (21); the first sealer (19) is clutched in the groove (22).

9. The toner outlet device, as recited in claim 1, wherein a spring (23) is arranged between the driving claw (2) and a positioning ring (12).

## Patentansprüche

1. Tonerauslassvorrichtung für eine Tonerkartusche, umfassend: einen oberen Deckel (1) und eine auf dem oberen Deckel (1) angeordnete Antriebskralle (2), wobei der obere Deckel (1) in Spielpassung mit der Antriebskralle (2) steht; ein Drehdeckel (3) drehbar innerhalb des oberen Deckels (1) angeordnet ist; die Antriebskralle (2) mit dem Drehdeckel (3) gekuppelt ist; ein Tonerauslass (4) auf dem Drehdeckel (3) selektiv mit einer Seitenöffnung (5) des oberen Deckels (1) verbunden ist; ein Antriebskopf (6) auf einem oberen Abschnitt des oberen Deckels (1) angeordnet ist; der Antriebskopf (6) durch den Drehdeckel (3) eine Torsion auf die Antriebskralle (2) überträgt.

2. Tonerauslassvorrichtung nach Anspruch 1, wobei der Drehdeckel (3) eine Schleifenseitenplatte (7) umfasst, wobei der Tonerauslass (4) auf der Schleifenseitenplatte (7) angeordnet ist; eine Schleifen-Positionierungsplatte (8) auf einer Innenseite der Schleifenseitenplatte (7) angeordnet ist und ein Schleifenzahnteil (9) auf einer Außenseite der Schleifen-Positionierungsplatte (8) angeordnet ist; eine Positionierungsstange (10) innerhalb des oberen Deckels (1) angeordnet ist und selektiv an der Schleifen-Positionierungsplatte (8) gekuppelt ist.

3. Tonerauslassvorrichtung nach Anspruch 2, wobei die Schleifen-Positionierungsplatte (8) auf eine Rückstell-Torsionsfeder (11) aufgezogen ist.

4. Tonerauslassvorrichtung nach Anspruch 1, wobei der Drehdeckel (3) durch einen Positionierungsring (12) in den oberen Deckel (1) gedrückt wird.

5. Tonerauslassvorrichtung nach Anspruch 1, wobei eine Antriebswelle (13) an einem unteren Abschnitt des Antriebskopfes (6) angeordnet ist und wobei die Antriebswelle (13) und der Antriebskopf (6) beweglich ineinander gesteckt sind; die Antriebskralle (2) an einem unteren Abschnitt der Antriebswelle (13) durch einen Punkt (14) hindurch angebracht ist, ein zweites Dichtungsmittel (20) zwischen der Antriebswelle (13) und dem oberen Deckel (1) angeordnet ist.

6. Tonerauslassvorrichtung nach Anspruch 1, wobei mehrere Trägerplatten (15) an einem oberen Abschnitt des Antriebskopfes (6) angeordnet sind und wobei benachbarte Trägerplatten in Spielpassung sind; eine erste Blockplatte (16) und eine zweite Blockplatte (17) auf jeder der Trägerplatten (15) angeordnet sind.

7. Tonerauslassvorrichtung nach Anspruch 1, wobei ein konischer Ring (18) an einer Außenseite des Antriebskopfes (6) angeordnet ist.

8. Tonerauslassvorrichtung nach Anspruch 1, wobei zwischen dem Antriebskopf (6) und dem oberen Deckel (1) ein erstes Dichtungsmittel (19) angeordnet ist; eine konische Fläche (21) an einer Seitenwand des oberen Deckels (1) angeordnet ist, und eine Nut (22) auf der konischen Fläche (21) gebohrt ist; wobei das erste Dichtungsmittel (19) in der Nut (22) eingeklemmt ist.

9. Tonerauslassvorrichtung nach Anspruch 1, wobei eine Feder (23) zwischen der Antriebskralle (2) und einem Positionierungsring (12) angeordnet ist.

## Revendications

1. Dispositif de sortie de toner pour une cartouche de toner, comprenant : un couvercle supérieur (1) et une griffe d'entraînement (2) disposée sur le couvercle supérieur (1), le couvercle supérieur (1) présentant un ajustement avec jeu avec la griffe d'entraînement (2) ; un couvercle rotatif (3) est disposé de manière rotative à l'intérieur du couvercle supérieur (1) ; la griffe d'entraînement (2) est emboîtée sur le couvercle rotatif (3) ; une sortie de toner (4) sur le couvercle rotatif (3) est accouplée sélectivement à une ouverture latérale (5) du couvercle supérieur (1) ; une tête d'entraînement (6) est disposée sur une partie supérieure du couvercle supérieur (1) ; la tête d'entraînement (6) transmet une torsion à la griffe d'entraînement (2) à travers le couvercle rotatif (3).

2. Dispositif de sortie de toner, selon la revendication 1, dans lequel le couvercle rotatif (3) comprend une planchette de côté de boucle (7), la sortie de toner (4) étant disposée sur la planchette de côté de boucle (7) ; une planchette de positionnement de boucle (8) est disposée sur un côté interne de la planchette de côté de boucle (7), et une partie dent de boucle (9) est disposée sur un côté externe de la planchette de côté de boucle (8) ; un pôle de positionnement (10) est disposé à l'intérieur du couvercle supérieur (1) et est emboîté sélectivement sur la planchette de côté de boucle (8).

3. Dispositif de sortie de toner, selon la revendication 2, dans lequel la planchette de positionnement de boucle (8) est enfilée sur un ressort de torsion de rappel (11).

4. Dispositif de sortie de toner, selon la revendication 1, dans lequel le couvercle rotatif (3) est pressé à l'intérieur du couvercle supérieur (1) à travers une bague de positionnement (12).

5. Dispositif de sortie de toner, selon la revendication 1, dans lequel un arbre d'entraînement (13) est disposé au niveau d'une partie inférieure de la tête d'entraînement (6), et l'arbre d'entraînement (13) et la tête d'entraînement (6) sont accouplés de manière mobile l'un avec l'autre ; la griffe d'entraînement (2) est montée sur une partie inférieure de l'arbre d'entraînement (13) à travers un buvard (14), un second scellant (20) étant disposé entre l'arbre d'entraînement (13) et le couvercle supérieur (1).

6. Dispositif de sortie de toner, selon la revendication 1, dans lequel une pluralité de feuilles de support (15) sont disposées sur une partie supérieure de la tête d'entraînement (6), et les feuilles de support adjacentes présentent un ajustement avec jeu ; une première plaque de bloc (16) et une seconde plaque de bloc (17) sont disposées sur chacune des feuilles de support (15).

7. Dispositif de sortie de toner, selon la revendication 1, dans lequel un anneau conique (18) est disposé sur un côté extérieur de la tête d'entraînement (6).

8. Dispositif de sortie de toner, selon la revendication 1, dans lequel un premier scellant (19) est disposé entre la tête d'entraînement (6) et le couvercle supérieur (1) ; une face conique (21) est disposée sur une paroi latérale du couvercle supérieur (1), et une rainure (22) est creusée sur la face conique (21) ; le premier scellant (19) est emboîté dans la rainure (22).

9. Dispositif de sortie de toner, selon la revendication 1, dans lequel un ressort (23) est disposé entre la griffe d'entraînement (2) et une bague de positionnement (12).
